# EUROPÄISCHE PATENTSCHRIFT

(11) **EP 1 895 326 B1**
(45) Veröffentlichungstag und Bekanntmachung des Hinweises auf die Patenterteilung: **14.07.2010**
(21) Anmeldenummer: 06119939.4
(22) Anmeldetag: 31.08.2006
(51) Int. Cl.: G01T 1/29

(54) **Vorrichtung zum Löschen einer Speicherleuchtstoffschicht**
Apparatus for erasure of a luminescent material storage plate
Dispositif destiné à l'effacement d'un disque fluorescent de mémoire

(43) Veröffentlichungstag der Anmeldung: 05.03.2008
(73) Patentinhaber: Agfa HealthCare NV, 2640 Mortsel (BE)
(72) Erfinder: Bode, Andreas, D-81476 München (DE); Reiser, Georg, D-80337 München (DE); Thoma, Ralph, D-86167 Augsburg (DE); Weber, Marc, D-81679 München (DE); Stallmeister, Stefan, D-85625 Glonn (DE); Baunach, Stephan, D-80339 München (DE); Minwegen, Heike, D-83043 Bad Aibling (DE); Dedler, Rupert, D-81547 München (DE); Fasbender, Robert, D-91054 Erlangen (DE)
(74) Vertreter: Linsmeier, Josef

(56) Entgegenhaltungen:
- JP-A- 2003 186 128
- JP-A- 2005 275 075
- US-A- 4 786 808
- US-A- 4 849 633
- US-A1- 2005 017 207

## Beschreibung

Die vorliegenden Erfindung betrifft eine Vorrichtung zum Löschen einer Speicherleuchtstoffschicht gemäß Anspruch 1.

Eine solche Vorrichtung wird insbesondere im Bereich der Computer-Radiografie (CR) für medizinische Zwecke eingesetzt. Von einem Objekt, beispielsweise einem Patienten oder einem Körperteil des Patienten, wird mittels Röntgenbestrahlung ein Bild erzeugt, das in einer Speicherleuchtstoffschicht als latentes Bild abgespeichert wird. Ein solches Röntgenbild enthält somit Röntgeninformationen über das Objekt. Zum Auslesen der in der Speicherleuchtstoffschicht abgespeicherten Röntgeninformationen wird die Speicherleuchtstoffschicht mittels einer Bestrahtungseinrichtung angeregt. Die Speicherleuchtstoffschicht emittiert aufgrund dieser Anregung Strahlung, die eine Intensität entsprechend der in der Speicherleuchtstoffschicht abgespeicherten Röntgeninformationen aufweist. Die von der Speicherleuchtstoffschicht ausgesandte Strahlung wird von einer Detektionseinrichtung erfasst und in elektrische Signale gewandelt, die ein Abbild der Röntgeninformationen enthalten. Die elektrischen Signale werden weiterverarbeitet und die in der Speicherleuchtstoffschicht abgespeicherten Röntgeninformationen anschließend sichtbar gemacht. Die Röntgeninformationen können beispielsweise direkt auf einem Monitor dargestellt oder mittels eines speziell für Röntgenbilder verwendbaren Druckers auf einen fotografischen Röntgenfilm geschrieben werden.

Nach dem Auslesen der Röntgeninformationen aus der Speicherleuchtstoffschicht verbleiben in dieser Reste des latenten Bildes. Ferner können Rauschinformationen abgespeichert sein. Um die Speicherleuchtstoffschicht für weitere Röntgenaufnahmen verwenden zu können, wird sie daher gelöscht. Dazu wird eine Strahlungsquelle verwendet, die eine Löschstrahlung auf die Speicherleuchtstoffschicht ausgibt. Aus der US 7,057,200 B2 ist eine Vorrichtung zum Löschen einer Speicherleuchtstoffschicht bekannt. Diese Löschvorrichtung enthält als Strahlungsquelle zum Aussenden der Löschstrahlung zwei parallel zueinander angeordnete Zeilen mit Leuchtdioden. Zum Löschen wird die Speicherleuchtstoffschicht in eine Transportrichtung durch einen Strahlengang der Leuchtdiodenzeilen geschoben. Die beiden Leuchtdiodenzeilen sind in Reflektoren integriert, die voneinander beabstandet sind. Die Reflektoren dienen dazu, von den Leuchtdioden ausgegebene Löschstrahlung in Richtung der Speicherleuchtstoffschicht zu reflektieren. Die Reflektoren haben eine rinnenförmige Querschnittsfläche mit stumpfen Innenwinkeln, so dass sich das rinnenförmige Profil der Reflektoren ausgehend von der Anordnung der Leuchtdioden in Richtung der Speicherleuchtstoffschicht öffnet. Dabei ist allerdings die Ausbreitung der Reflektoren in Transportrichtung an ihre Funktion der Strahlungsführung der von den Leuchtdioden emittierten Löschstrahlung angepasst und in Relation zu dem Abstand der Reflektoren zu der Speicherleuchtstoffschicht relativ klein.

JP 2005-275075 offenbart eine Vorrichtung, bei welcher zusätzlich zu einem ersten Reflektor, der das von den Strahlungsquellen abgegebene Licht zur Speicherleuchtstoffschicht hin reflektiert, weitere Reflektoren vorgesehen sind, die im Randbereich der Strahlungsquellen zwischen diesen und der Speicherleuchtstoffschicht angeordnet sind und zu einer gleichmäßigen Beleuchtung der Speicherleuchtstoffschicht beitragen sollen. US 4,849,633 hat eine Löscheinheit zum Gegenstand, bei welcher die Strahlungsquellen in einer im Wesentlichen quaderförmigen Schale angeordnet sind, die in ihrem Inneren reflektierende Oberflächen aufweist. In US 4,786,808 wird eine Vorrichtung beschrieben, bei welcher eine oder mehrere Strahlungsquellen in einer Vertiefung des Reflektors angeordnet ist bzw. sind. JP 2003-186128 hat eine Löschvorrichtung zum Gegenstand, bei der das von den Strahlungsquellen emittierte Licht mit Hilfe eines Reflektors, welcher Reflexionsflächen mit trapezförmigem Querschnitt aufweist, zur Speicherleuchtstoffschicht hin reflektiert wird.

Es ist die Aufgabe der vorliegenden Erfindung, eine hohe Effizienz beim Löschen einer Speicherleuchtstoffschicht zu ermöglichen.

Diese Aufgabe wird gemäß der technischen Lehre des Anspruchs 1 gelöst. Vorteilhafte Ausgestaltungen der Erfindung können den abhängigen Ansprüchen entnommen werden.

Erfindungsgemäß ist der Reflektor zum Reflektieren von von der Speicherleuchtstoffschicht reflektierter Löschstrahlung in Richtung der Speicherleuchtstoffschicht angeordnet und ausgestaltet. Es ist eine weitere reflektierende Fläche zum Reflektieren von Löschstrahlung vorhanden, die dem Reflektor, in eine Richtung senkrecht zur Richtung der Relativbewegung betrachtet, gegenüberliegt. Die weitere reflektierende Fläche ist auf der dem Reflektor abgewandten Seite der Aufnahmeebene angeordnet. Dadurch kann besonders gut gewährleistet werden, dass nicht auf die Speicherleuchtstoffschicht auftreffende Löschstrahlung von der weiteren reflektierenden Fläche reflektiert wird, um dann von dem Reflektor in Richtung der Speicherleuchtstoffschicht reflektiert zu werden.

Der vorliegenden Erfindung liegt die Erkenntnis zugrunde, dass die Speicherleuchtstoffschicht üblicherweise einen hohen Reflexionsgrad hat. Dadurch wird ein großer Teil der Löschstrahlung ungenutzt reflektiert und trägt nicht zum Löschen von in der Speicherleuchtstoffschicht abgespeicherten, unerwünschten Bildinformationen bei. Aufgrund der vorliegenden Erfindung wird die von der Speicherleuchtstoffschicht reflektierte Löschstrahlung von dem Reflektor aufgefangen und erneut in Richtung der Speicherleuchtstoffschicht zurückreflektiert. Diese Reflexion kann gerichtet oder diffus sein. Die von dem Reflektor zurückreflektierte Löschstrahlung kann somit ebenfalls zum Löschen der Speicherleuchtstoffschicht beitragen. Dadurch wird der Wirkungsgrad des Löschens wesentlich verbessert. Ferner ist der Leistungsbedarf geringer, was zu weniger Verlustwärme und zu einer Erhöhung der Lebensdauer führt. Des Weiteren ist davon auszugehen, dass die Ausfallrate reduziert wird. Gegebenenfalls kann dadurch auf ein Kühlen der Strahlungsquelle verzichtet werden. Dies gewährleistet eine kostengünstige Löschvorrichtung. Ferner wird vorteilhafterweise ein geringer Platzbedarf möglich. Die Ausgestaltung des Reflektors kann vorteilhafterweise auf einfache Weise an die Art und Weise und die Form der Speicherleuchtstoffschicht angepasst werden. Der Reflektor ist insbesondere so angeordnet, dass er wenigstens eine Reflexionsfläche enthält, die der Aufnahmeebene zugewandt ist. Er kann vorteilhafterweise an der der Aufnahmeebene zugewandten Reflektorfläche reflektierende Schichten aufweisen. Dadurch kann der Reflexionsgrad merklich verbessert werden. Durch diese weitere reflektierende Fläche kann vorteilhafterweise zu Beginn und/oder am Ende des Löschvorgangs, d. h. wenn der Strahlengang der Strahlenquelle nicht oder nicht vollständig auf die Speicherleuchtstoffschicht gerichtet ist, die von der Strahlungsquelle ausgegebene Löschstrahlung von der weiteren reflektierenden Fläche in Richtung des Reflektors reflektiert werden. Die von der weiteren reflektierenden Fläche reflektierte Löschstrahlung, die die Speicherleuchtstoffschicht insbesondere noch nicht erreicht hat, kann somit von dem Reflektor auf die Speicherleuchtstoffschicht gerichtet werden. Insbesondere die vordere und ggf. die hintere Kante der Speicherleuchtstoffschicht können somit mit hoher Effizienz gelöscht werden. Die weitere reflektierende Fläche kann so ausgestaltet sein, dass sie die Löschstrahlung gerichtet oder diffus reflektiert.

Besonders bevorzugt weist die weitere reflektierende Fläche in Richtung der Relativbewegung eine Ausbreitung auf, die zumindest so groß ist, wie diejenigen des Reflektors. Dadurch kann gewährleistet werden, dass Formen der weiteren reflektierenden Fläche und des Reflektors besonders gut aufeinander abgestimmt sind. Eine besonders große Menge von von der Strahlungsquelle emittierter Löschstrahlung kann von der weiteren reflektierenden Fläche reflektiert und eine große Menge dieser reflektierten Löschstrahlung von dem Reflektor in Richtung der Speicherleuchtstoffschicht reflektiert werden. Dadurch lässt sich eine besonders gute Löscheffizienz erreichen.

Besonders bevorzugt ist eine Ausbreitung des Reflektors in Richtung der Relativbewegung wenigstens zehnmal so groß, wie ein kleinster Abstand des Reflektors von der Aufnahmeebene. Durch diese Dimensionierung des Reflektors mit seiner großen Ausbreitung in Richtung der Relativbewegung und seinem Abstand zu der Aufnahmeebene für die Speicherleuchtstoffschicht kann vorteilhafterweise gewährleistet werden, dass ein großer Teil der von der Speicherleuchtstoffschicht reflektierten oder gestreuten Löschstrahlung aufgefangen oder erfasst und erneut in Richtung der Speicherleuchtstoffschicht reflektiert werden kann.

In einer vorteilhaften Ausgestaltung der Erfindung weist der Reflektor eine ebene Reflektorfläche auf, die parallel zur Aufnahmeebene verläuft. Eine solche Reflektorform kann zuverlässig reflektierte Löschstrahlung zur Speicherleuchtstoffschicht zurückreflektieren. Diese Reflektorform ist kostengünstig herstellbar und kompakt ausgestaltbar.

In einer weiteren vorteilhaften Ausgestaltung weist der Reflektor eine Reflektorfläche mit einer Struktur auf. Mit einer solchen Struktur kann die Effizienz des Löschens noch weiter erhöht werden. Die Struktur kann insbesondere geriffelt, dach-, sägezahn- oder dreieckförmig, etc. sein. Besonders bevorzugt kann die strukturierte Reflektorfläche retroreflektiv ausgestaltet sein, so dass sie zumindest einen Teil der von der Speicherleuchtstoffschicht zurückgestreuten Löschstrahlung an dieselben Stellen der Speicherleuchtstoffschicht zurückreflektiert. Eine solche retroreflektive Reflektorfläche gewährleistet ein besonders effizientes Löschen der Speicherleuchtstoffschicht. An diejenigen Stellen, die viel Löschstrahlung gestreut und reflektiert haben, wird auch viel Löschstrahlung zurückreflektiert. Die retroreflektive Reflektorfläche kann insbesondere nach Art eines sogenannten "Katzenauges" ausgestaltet sein und beispielsweise als Folie eingesetzt werden. Dies ist besonders platzsparend und kostengünstig.

Besonders vorteilhaft weist der Reflektor wenigstens zwei Reflektorflächen auf, so dass der Reflektor, in Richtung der Relativbewegung betrachtet, zu beiden Seiten der Strahlungsquelle ausgebildet ist. Dadurch kann besonders viel Löschstrahlung erfasst und zurückreflektiert werden. Der Reflektor kann dabei insbesondere in Richtung der Relativbewegung spiegelsymmetrisch ausgestaltet sein, wobei eine Symmetrieachse senkrecht zur Richtung der Relativbewegung und, in Richtung der Relativbewegung betrachtet, zentral durch die Strahlungsquelle hindurch verläuft. Durch einen solchen Reflektor kann zu beiden Seiten der Strahlungsquelle eine große Menge an reflektierter Löschstrahlung erfasst und zur Speicherleuchtstoffschicht zurückreflektiert werden.

Bevorzugt weist der Reflektor eine rinnen- oder trogförmige Querschnittsfläche auf. Ein solcher Reflektor ist besonders einfach herstellbar und erreicht einen hohen Wirkungsgrad beim Löschen. Die rinnen- oder trogförmige Querschnittsfläche kann vorteilhafterweise stumpfe Innenwinkel aufweisen, die insbesondere größer oder gleich 130° sind. Dadurch wird die Menge an reflektierter Löschstrahlung, die wieder zur Speicherleuchtstoffschicht zurückreflektiert wird, noch weiter erhöht.

In einer vorteilhaften Ausgestaltung der Erfindung schließen sich, in Richtung der Relativbewegung betrachtet, an die beiden Enden der Rinne parallel zur Aufnahmeebene verlaufende Reflektor-Fortsatzflächen an. Vorzugsweise weisen die Reflektor-Fortsatzflächen Strukturen auf. Diese Ausgestaltungen gewährleisten jeweils eine noch bessere Effizienz des Löschvorgangs.

Besonders vorteilhaft weist die Strahlungsquelle wenigstens zwei senkrecht zur Richtung der Relativbewegung und parallel zu der Aufnahmeebene verlaufende Zeilen mit Leuchtdioden auf. Dadurch lässt sich eine ausreichend hohe Intensität von Löschstrahlung erzeugen, wobei der Leistungsverbrauch der Leuchtdioden besonders gering ist. Die wenigstens zwei Zeilen mit Leuchtdioden können bevorzugt in den Reflektor integriert sein. Dabei kann ein Abstand zwischen den wenigstens zwei Zeilen vorteilhafterweise kleiner oder gleich einem Abstand der Leuchtdioden zu der Aufnahmeebene sein. Der Reflektor, und damit auch die Löschvorrichtung, kann dadurch besonders kompakt ausgestaltet werden. Ferner kann die von den Leuchtdiodenzeilen emittierte Löschstrahlung besonders gut ausgerichtet auf die Speicherleuchtstoffschicht ausgegeben werden.

Besonders bevorzugt ist den wenigstens zwei Zeilen mit Leuchtdioden jeweils ein eigener Reflektor zugeordnet. Die Leuchtdioden der jeweiligen Zeilen emittieren ferner eine Strahlung in einem anderen, insbesondere schmalbandigen, Wellenlängenbereich, als die Leuchtdioden der anderen Zeilen. Die Reflektoren sind insbesondere so ausgestaltet, dass sie zu einer Trennung der von den unterschiedlichen Leuchtdiodenzeilen ausgegebenen Löschstrahlungen mit den unterschiedlichen Wellenlängenbereichen beitragen. Dadurch kann verhindert werden, dass sich bestimmte Spektralbereiche gegenseitig beeinflussen oder stören. Die Wellenlängenbereiche sind vorteilhafterweise so gewählt, dass solche Wellenlängen, die nicht zum Löschen des eingesetzten Typs von Speicherleuchtstoffschicht beitragen, nicht vorhanden sind. Dadurch ist ein sonst erforderliches Herausfiltern solcher Wellenlängen nicht erforderlich. Ferner wird eine besonders gute Löscheffizienz erreicht.

Vorzugsweise weist die Speicherleuchtstoffschicht der erfindungsgemäßen Vorrichtung einen Reflexionsgrad für die Löschstrahlung von größer oder gleich 70%, insbesondere größer oder gleich 80%, auf. Gerade für Speicherleuchtstoffschichten mit einem solch hohen Reflexionsgrad kann die erfindungsgemäße Löschvorrichtung besonders effizient eingesetzt werden.

Weitere Vorteile der Erfindung ergeben sich aus der folgenden Beschreibung von Ausführungsbeispielen, wobei Bezug auf die beigefügten Zeichnungen genommen wird. Es zeigen:
- Fig. 1: ein erstes Ausführungsbeispiel einer erfindungsgemäßen Löschvorrichtung mit einem Reflektor, der ebene, parallel zu einer Speicherleuchtstoffschicht verlaufende Reflektorflächen aufweist, und mit einer dem Reflektor gegenüberliegenden weiteren Reflexionsfläche,
- Fig. 2: ein zweites Ausführungsbeispiel einer erfindungsgemäßen Löschvorrichtung mit einem Reflektor, der parallel zu der Speicherleuchtstoffschicht verlaufende Reflektorflächen mit einer dreieckförmigen Struktur aufweist,
- Fig. 3: ein drittes Ausführungsbeispiel einer erfindungsgemäßen Löschvorrichtung mit einem rinnenförmigen Reflektor,
- Fig. 4: ein viertes Ausführungsbeispiel einer erfindungsgemäßen Löschvorrichtung mit einem rinnenförmigen Reflektor, der ausgehend von den Enden der Rinne seitliche Reflektor-Fortsätze aufweist, die sich eben und parallel zu der Speicherleuchtstoffschicht erstrecken,
- Fig. 5: ein fünftes Ausführungsbeispiel einer erfindungsgemäßen Löschvorrichtung mit dem rinnenförmigen Reflektor, der ausgehend von den Enden der Rinne seitliche Reflektor-Fortsätze aufweist, die sich parallel zu der Speicherleuchtstoffschicht erstrecken und eine feine dreieckförmige Struktur aufweisen,
- Fig. 6: ein sechstes Ausführungsbeispiel einer erfindungsgemäßen Löschvorrichtung mit dem rinnenförmigen Reflektor, der ausgehend von den Enden der Rinne seitliche Reflektor-Fortsätze aufweist, die sich parallel zu der Speicherleuchtstoffschicht erstrecken und eine grobe dreieckförmige Struktur aufweisen,
- Fig. 7: ein siebtes Ausführungsbeispiel einer erfindungsgemäßen Löschvorrichtung mit einem Reflektor, der ausgehend von den Enden einer kleinen Rinne seitliche Reflektor-Fortsätze aufweist, die sich parallel zu der Speicherleuchtstoffschicht erstrecken und eine sägezahnförmige Struktur aufweisen, und
- Fig. 8: ein achtes Ausführungsbeispiel einer erfindungsgemäßen Löschvorrichtung mit zwei Leuchtdiodenzeilen, die Licht in verschiedenen Wellenlängenbereichen ausgeben und jeweils einen eigenen Reflektor aufweisen.

Im Folgenden werden, sofern nicht anders angegeben, für gleiche oder gleichwirkende Elemente gleiche Bezugszeichen verwendet.

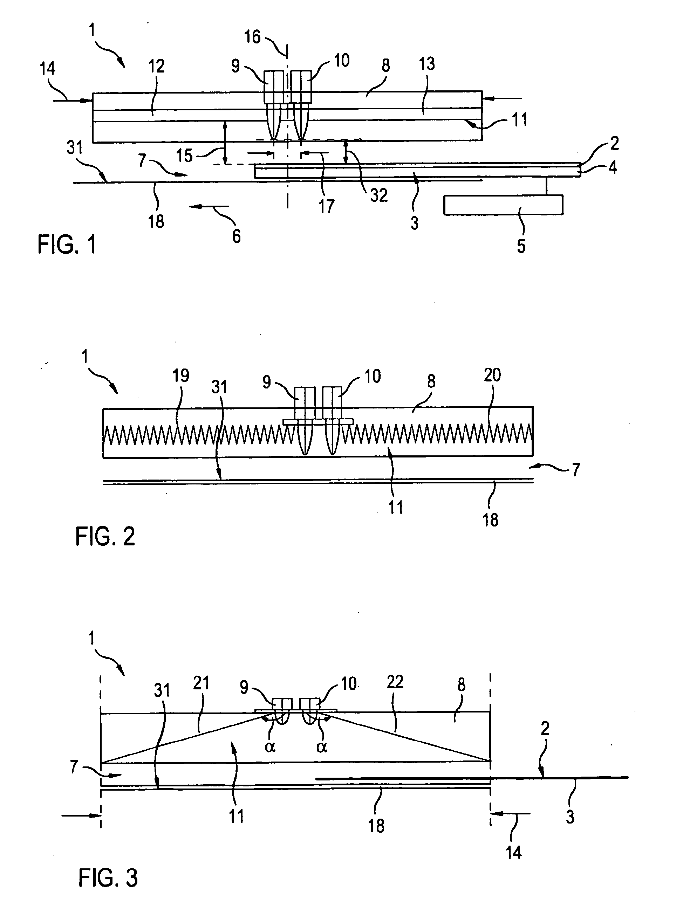

Fig. 1 zeigt ein erstes Ausführungsbeispiel einer erfindungsgemäßen Löschvorrichtung 1 zum Löschen von Röntgeninformationen, die in einer Speicherleuchtstoffschicht 2 einer Speicherleuchtstoffplatte 3 abgespeichert sind. Die Speicherleuchtstoffplatte 3 weist eine Trägerschicht 4 auf, auf der die Speicherleuchtstoffschicht 2 aufgebracht ist. Die Speicherleuchtstoffschicht 2 setzt sich vorzugsweise aus einer Vielzahl von Phophorpartikeln zusammen, die zum Speichern der Röntgeninformationen dienen. Die Trägerschicht 4 ist hier ein Laminat, das vorteilhafterweise eine Dicke von 1-2 mm hat. Die Speicherleuchtstoffplatte 3 wird von außen in die Löschvorrichtung 1 hineingeschoben werden. Innerhalb der Löschvorrichtung 1 wird die Speicherleuchtstoffplatte 3 mittels eines Antriebs 5 in eine Transportrichtung verschoben, die durch einen Pfeil 6 repräsentiert wird. Die Speicherleuchtstoffplatte 3 ist in der Löschvorrichtung 1 in einer Aufnahmeebene 7 geführt und in dieser Aufnahmeebene 7 verschiebbar. Unterhalb der Aufnahmeebene 7 befindet sich eine Auflage 18, auf der die Speicherleuchtstoffplatte 3 aufliegen kann.

Die Löschvorrichtung 1 enthält eine Strahlungsquelle 8 zum Aussenden von Löschstrahlung. Die Strahlungsquelle 8 weist hier zwei parallel zueinander angeordnete Leuchtdiodenzeilen 9 und 10 auf. Die Leuchtdiodenzeilen 9, 10 enthalten jeweils eine Vielzahl von nebeneinander angeordneten Leuchtdioden. Die Leuchtdiodenzeilen 9, 10 erstrecken sich über die gesamte Länge der Speicherleuchtstoffschicht 2. Die Länge der Speicherleuchtstoffschicht 2 verläuft in der Darstellung nach Fig. 1 senkrecht zur Transportrichtung 6 und in Richtung der Zeichnungsblattebene. Die Breite der Speicherleuchtstoffschicht 2 erstreckt sich in Transportrichtung 6. Mittels des Antriebs 5 wird die Speicherleuchtstoffschicht 2 in Transportrichtung 6 mit gleichförmiger Transportgeschwindigkeit an den Leuchtdiodenzeilen 9, 10 vorbeitransportiert. Dadurch durchläuft die Speicherleuchtstoffschicht 2 die Strahlengänge der Leuchtdiodenzeilen 9, 10. Es ist alternativ auch möglich, anstelle der Speicherleuchtstoffplatte 3 die Strahlungsquelle zu transportieren, wobei dann die Speicherleuchtstoffplatte 3 in der Löschvorrichtung 1 nicht bewegt wird. In beiden Fällen wird zwischen der Strahlungsquelle 8 und der in der Aufnahmeebene 7 liegenden Speicherleuchtstoffschicht 2 eine Relativbewegung ausgeführt, die hier in Richtung des Pfeils 6 verläuft.

Beim Transportieren der Speicherleuchtstoffplatte 3 trifft das von den Leuchtdioden der Leuchtdiodenzeilen 9, 10 emittierte Löschlicht auf die Speicherleuchtstoffschicht 2. Ein Teil des Löschlichts dringt in die Speicherleuchtstoffschicht 2 ein und löscht die in ihr nach einem Auslesen verbliebenen Röntgeninformationen und ein gegebenenfalls vorhandenes Rauschen. Da die Speicherleuchtstoffschicht 2 für das Löschlicht einen Reflexionsgrad von wenigstens 70%, insbesondere von wenigstens 80%, aufweist, wird ein großer Teil des Löschlichts von der Speicherleuchtstoffschicht 2 reflektiert, ohne zum Löschen beizutragen.

Um eine hohe Effizienz und einen hohen Wirkungsgrad beim Löschen zu erzielen, hat die Löschvorrichtung 1 erfindungsgemäß einen Reflektor 11. Der Reflektor 11 weist im vorliegenden Ausführungsbeispiel zwei ebene, parallel zu der Speicherleuchtstoffschicht 2 verlaufende Reflektorflächen 12 und 13 auf. Die Reflektorflächen 12, 13 sind, in Transportrichtung 6 betrachtet, zu beiden Seiten der Strahlungsquelle 8 angeordnet und vorteilhafterweise gleich groß. Es ist aber ebenso möglich, nur eine einzige Reflektorfläche auf einer der Seiten der Strahlungsquelle 8 vorzusehen. Ferner ist es möglich, die Reflektorflächen 12, 13 einteilig oder eine der beiden kleiner auszugestalten, als die andere. Der Reflektor 11 erstreckt sich über die gesamte Länge der Speicherleuchtstoffschicht 2 und, in Transportrichtung 6 betrachtet, über eine Breite 14. Von der Oberfläche der in der Aufnahmeebene 7 befindlichen Speicherleuchtstoffschicht 2 weist der Reflektor einen kleinsten Abstand 15 auf. Die Breite 14 ist wenigstens zehnmal so groß, wie der kleinste Abstand 15. Der Reflektor 11 ist in Transportrichtung 6 spiegelsymmetrisch ausgestaltet. Dabei verläuft eine Symmetrieachse 16 senkrecht zur Transportrichtung 6 und, bezogen auf die Breite 14, zentral durch die Strahlungsquelle 8 hindurch. Im vorliegenden Ausführungsbeispiel verläuft die Symmetrieachse 16 somit zwischen den beiden Leuchtdiodenzeilen 9, 10. Die zwei Leuchtdiodenzeilen 9, 10 sind hier zentral in den Reflektor 11 integriert. Ein Abstand 17 zwischen den zwei Leuchtdiodenzeilen 9, 10 ist vorteilhafterweise kleiner oder gleich einem Abstand 32 der Leuchtdioden zu der in der Aufnahmeebene 7 liegenden Speicherleuchtstoffschicht 2. Die Reflektorflächen 12, 13 weisen auf ihren zur Speicherleuchtstoffschicht 2 hin gewandten Oberflächen reflektierende Schichten auf, die für von der Speicherleuchtstoffschicht 2 reflektiertes Löschlicht hochgradig reflektierend sind. Durch den Reflektor 11 wird Löschlicht, das von der Speicherleuchtstoffschicht 2 reflektiert oder gestreut wird, in Richtung der Speicherleuchtstoffschicht 2 zurückreflektiert. Durch diese Zurückreflexion besteht die Möglichkeit, dass das Löschlicht nun zum Löschen der Röntgeninformationen in die Speicherleuchtstoffschicht 2 eindringt.

Die Löschvorrichtung 1 weist eine dem Reflektor 11, in eine Richtung senkrecht zur Transportgeschwindigkeit 6 betrachtet, gegenüberliegende weitere Reflexionsfläche 31 auf. Die Reflexionsfläche 31 ist zum Reflektieren von Löschlicht ausgestaltet, das von der Strahlungsquelle 8 ausgegeben wurde. Von der Reflexionsfläche 31 reflektiertes, weiteres Löschlicht wurde ferner gegebenenfalls bereits von der Speicherleuchtstoffschicht 2 und dem Reflektor 11 reflektiert. Zum Reflektieren von Löschlicht kann insbesondere auf der der Strahlungsquelle 8 zugewandten Seite der Auflage 18, d. h. auf der dem Reflektor 11 abgewandten Seite der Aufnahmeebene 7, die Reflexionsfläche 31 aufgebracht sein. Die Reflexionsfläche 31 kann vorteilhafterweise als dünne Schicht auf die Auflage 18 aufgebracht sein. Die Reflexionsfläche 31 ist somit derart angeordnet, dass die Speicherleuchtstoffplatte 3 zwischen dem Reflektor 11 und der Reflexionsfläche 31 hindurch transportiert werden kann. Die Reflexionsfläche 31 kann das Löschlicht gerichtet oder diffus zum Reflektor 11 reflektieren. Die Reflexionsfläche 31 ist hier in Transportrichtung 6 vorteilhafterweise so breit, wie der Reflektor 11. Die Fig. 1 zeigt die in die Löschvorrichtung 1 einfahrende Speicherleuchtstoffplatte 3. Die Reflexionsfläche 31 gewährleistet vorteilhafterweise, dass das von der Strahlungsquelle 8 ausgegebene Löschlicht auch dann mit einem hohen Wirkungsgrad zum Löschen beiträgt, wenn die Speicherleuchtstoffplatte 3 sich noch nicht vollständig in der Löschvorrichtung 1 befindet. Insbesondere wird gewährleistet, dass die führende Kante der Speicherleuchtstoffschicht 2 mit erhöhter Effizienz gelöscht wird. Ähnliches gilt, wenn die Speicherleuchtstoffplatte 3 aus der Löschvorrichtung 1 herausfährt. Es ist zum Löschen der Speicherleuchtstoffschicht 2 alternativ möglich, die Speicherleuchtstoffplatte 3 in der Löschvorrichtung 1 ruhen zu lassen und die Strahlungsquelle 8 mitsamt des Reflektors 11 und der gegenüberliegenden Reflexionsschicht 31 entlang der Speicherleuchtstoffplatte 3 zu transportieren.

Fig. 2 zeigt ein zweites Ausführungsbeispiel der erfindungsgemäßen Löschvorrichtung 1. Die Speicherleuchtstoffplatte ist hier nicht dargestellt. Dargestellt ist die Auflage 18, oberhalb der sich die Aufnahmeebene 7 zum Aufnehmen und Führen der Speicherleuchtstoffplatte befindet. Die Löschvorrichtung 1 enthält den Reflektor 11. Dieser hat hier zwei Reflektorflächen 19 und 20, die parallel zu der Aufnahmeebene 7 und der Auflage 18 verlaufen. Die Reflektorflächen 19, 20 weisen jeweils eine Struktur auf, die hier im Wesentlichen dreieckförmig, nach Art von feinen Sägezähnen ausgestaltet ist. Mittels dieser Struktur ist ein retroreflektives Profil der Reflektorflächen 19, 20 realisiert.

Fig. 3 zeigt ein drittes Ausführungsbeispiel der erfindungsgemäßen Löschvorrichtung 1. In diesem dritten Ausführungsbeispiel ist der Reflektor 11 rinnen- oder trogförmig ausgestaltet. Die Querschnittsfläche des Reflektors 11 weist somit die Form einer Rinne auf. Dazu hat der Reflektor 11 zwei geradlinige Reflektorflächen 21, 22, die ausgehend von der Strahlungsquelle 8 mit stumpfen Innenwinkeln α schräg nach außen verlaufen. Die Innenwinkel betragen hier ca. 165°.

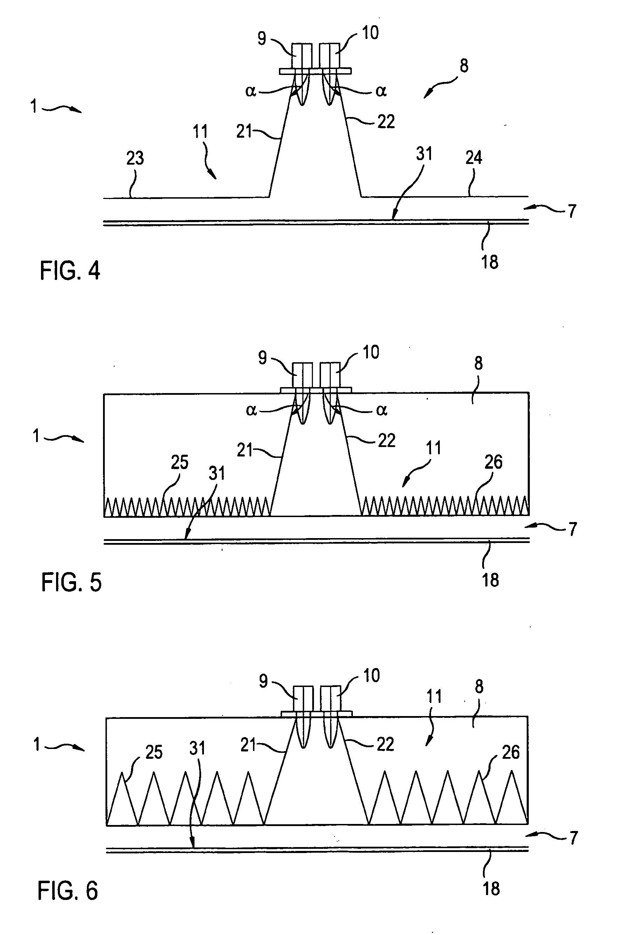

Fig. 4 zeigt ein viertes Ausführungsbeispiel der erfindungsgemäßen Löschvorrichtung 1. Der Reflektor 11 ist hier mittels der zwei geradlinigen Reflektorflächen 21, 22 ebenfalls rinnenförmig ausgestaltet. Die Innenwinkel α der rinnenförmigen Querschnittsfläche betragen hier ca. 110°. Der Reflektor 11 weist ausgehend von den unteren Enden der Rinne seitliche Reflektor-Fortsätze 23, 24 auf, die sich eben und parallel zu der Aufnahmeebene 7 für die Speicherleuchtstoffplatte nach außen erstrecken.

Fig. 5 zeigt ein fünftes Ausführungsbeispiel der erfindungsgemäßen Löschvorrichtung 1. Der Reflektor 11 ist hier, wie der Reflektor 11 gemäß dem vierten Ausführungsbeispiel, mittels der zwei geradlinigen Reflektorflächen 21, 22 rinnenförmig ausgestaltet. Die Innenwinkel α der rinnenförmigen Querschnittsfläche betragen ca. 110°. Der Reflektor 11 weist ausgehend von den unteren Enden der Rinne seitliche Reflektor-Fortsätze 25, 26 auf, die sich parallel zu der Aufnahmeebene 7 für die Speicherleuchtstoffplatte nach außen erstrecken. Die seitlichen Reflektor-Fortsätze 25, 26 haben hier eine feine dreieckförmige Struktur. Mittels dieser Struktur ist ein retroreflektives Profil der Reflektor-Fortsätze 25, 26 realisiert.

Fig. 6 zeigt ein sechstes Ausführungsbeispiel einer erfindungsgemäßen Löschvorrichtung 1. Der Reflektor 11 entspricht hier weitgehend dem Reflektor der Löschvorrichtung 1 gemäß dem fünften Ausführungsbeispiel nach Fig. 5. Allerdings haben die seitlichen Reflektor-Fortsätze 25, 26 hier eine grobe dreieckförmige Struktur. Mittels dieser Struktur ist ebenfalls ein retroreflektives Profil der Reflektor-Fortsätze 25, 26 realisiert.

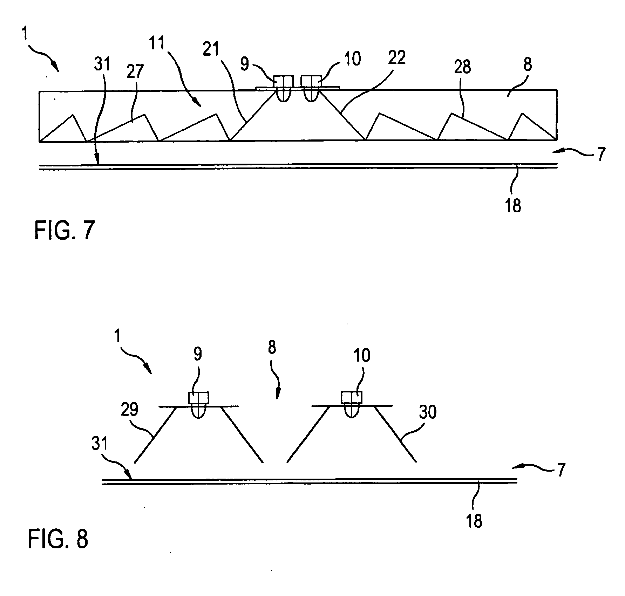

Fig. 7 zeigt ein siebtes Ausführungsbeispiel der erfindungsgemäßen Löschvorrichtung 1. Der Reflektor 11 ist hier mittels zweier geradlinigen Reflektorflächen 21, 22 ebenfalls rinnenförmig ausgestaltet. Allerdings sind die Reflektorflächen 21, 22 hier kürzer, als diejenigen der Ausführungsbeispiele gemäß der Fig. 4-6. Der Reflektor 11 weist ausgehend von den unteren Enden der Reflektorflächen 21, 22 der Rinne seitliche Reflektor-Fortsätze 27, 28 auf, die sich parallel zu der Aufnahmeebene 7 für die Speicherleuchtstoffplatte nach außen erstrecken. Die seitlichen Reflektor-Fortsätze 27, 28 haben hier eine grobe sägezahnförmige Struktur mit einer nur geringen Anzahl von Sägezähnen. Mittels dieser Struktur ist auch ein retroreflektives Profil der Reflektor-Fortsätze 27, 28 realisiert.

Fig. 8 zeigt ein achtes Ausführungsbeispiel der erfindungsgemäßen Löschvorrichtung 1. In diesem achten Ausführungsbeispiel enthält die Strahlungsquelle 8 die zwei Leuchtdiodenzeilen 9, 10, die hier allerdings jeweils einen eigenen Reflektor aufweisen. Die Leuchtdiodenzeile 9 ist in einen trogförmigen Reflektor 29 und die Leuchtdiodenzeile 10 in einen trogförmigen Reflektor 30 integriert. Die beiden Reflektoren 29, 30 sind voneinander getrennt, so dass das von den Leuchtdiodenzeilen 9, 10 ausgegebene Löschlicht voneinander getrennt auf die in der Löschvorrichtung befindliche Speicherleuchtstoffschicht auftreffen. Die Leuchtdiodenzeilen 9, 10 geben Löschlicht in verschiedenen Wellenlängenbereichen aus. Die Leuchtdiodenzeile 9 gibt Löschlicht im blauen Wellenlängenbereich und die Leuchtdiodenzeile 10 im roten Wellenlängenbereich aus. Dadurch lässt sich vorteilhafterweise eine gute "Farbtrennung", und damit eine hohe Löscheffizienz, erreichen. In Transportrichtung 6 der Speicherleuchtstoffplatte trifft daher zuerst blaues und anschließend rotes Löschlicht auf die Speicherleuchtstoffschicht. Ferner ist die Intensität des langwelligen, roten Löschlichts größer, als die Intensität des kurzwelligen, blauen Löschlichts. Die Intensitätsanteil des roten Löschlichts beträgt hier vorteilhafterweise ca. 66% und der Intensitätsanteil des blauen Löschlichts ca. 33%. Auf diese Weise ist eine besonders gute Löscheffizienz gewährleistet.

Zur Gewährleistung einer besonders effizienten Farbtrennung kann es von Vorteil sein, zumindest einen der Reflektoren 29 bzw. 30 in der Weise asymmetrisch auszugestalten, dass die dem jeweils anderen Reflektor 30 bzw. 29 zugewandte Flanke des jeweiligen Reflektortroges einen kleineren Innenwinkel aufweist als die dem jeweils anderen Reflektor 30 bzw. 29 abgewandte Flanke.

Zur weiteren Verbesserung der Löscheffizienz ist es möglich, an der Strahlungsquelle 8, d. h. insbesondere an den Leuchtdiodenzeilen 9, 10 Zusatzoptiken vorzusehen, die den Emissionswinkel der Leuchtdioden verkleinern. Dadurch kann die auf der Speicherleuchtstoffschicht 2 angestrahlte Fläche schmäler ausgestaltet werden. Dies erhöht die Leistungsdichte zum Löschen.

## Patentansprüche

1. Vorrichtung (1) zum Löschen einer Speicherleuchtstoffschicht (2) mit
- einer Strahlungsquelle (8) zum Erzeugen und Aussenden einer Löschstrahlung,
- einem Antrieb (5) zum Erzeugen einer Relativbewegung zwischen der Speicheneuchtstoffschicht (2) und der Strahlungsquelle (8), wobei die Speicherleuchtstoffschicht (2) in einer Aufnahmeebene (7) liegt bzw. bewegt wird,
- einem Reflektor (11) zum Reflektieren von Strahlung, wobei der Reflektor (11) zum Reflektieren von von der Speicherleuchtstoffschicht (2) reflektierter Löschstrahlung in Richtung der Speicherleuchtstoffschicht (2) angeordnet und ausgestaltet ist, und
- einer weiteren reflektierenden Fläche (31) zum Reflektieren von Löschstrahlung, die dem Reflektor (11), in eine Richtung senkrecht zur Richtung (6) der Relativbewegung betrachtet, gegenüberliegt und
auf der dem Reflektor (11) abgewandten Seite der Aufnahmeebene (7) angeordnet ist, und
- einer Speicherleuchtstoffschicht,
**dadurch gekennzeichnet, dass** die Vorrichtung so ausgestaltet ist, dass die Speicherleuchtstoffschicht (2) zwischen dem Reflektor (11) und der weiteren reflektierenden Fläche (31) hindurch transportiert wird oder bei ruhender Speicherleuchtstoffschicht (2) die Strahlungsquelle (8) mitsamt dem Reflektor (11) und der gegenüberliegenden weiteren reflektierenden Fläche (31) entlang der Speicherleuchtstoffschicht (2) transportiert wird.

2. Vorrichtung nach Anspruch 1, **dadurch gekennzeichnet, dass** die weitere reflektierende Fläche (31) in Richtung (6) der Relativbewegung eine Ausbreitung (14) aufweist, die zumindest so groß ist, wie diejenige des Reflektors (11).

3. Vorrichtung nach einem der vorhergehenden Ansprüche, **dadurch gekennzeichnet, dass** eine Ausbreitung (14) des Reflektors (11) in Richtung (6) der Relativbewegung wenigstens zehnmal so groß ist, wie ein kleinster Abstand (15) des Reflektors (11) von der Aufnahmeebene (7).

4. Vorrichtung nach einem der vorhergehenden Ansprüche, **dadurch gekennzeichnet, dass** der Reflektor (11) eine ebene Reflektorfläche (12, 13) aufweist, die parallel zur Aufnahmeebene (7) verläuft.

5. Vorrichtung nach einem der vorhergehenden Ansprüche, **dadurch gekennzeichnet, dass** der Reflektor (11) eine Reflektorfläche (19, 20; 25, 26; 27, 28) mit einer Struktur aufweist.

6. Vorrichtung nach einem der vorhergehenden Ansprüche, **dadurch gekennzeichnet, dass** der Reflektor (11) wenigstens zwei Reflektorflächen aufweist, so dass der Reflektor (11), in Richtung der Relativbewegung betrachtet, zu beiden Seiten der Strahlungsquelle (8) ausgebildet ist.

7. Vorrichtung nach einem der vorhergehenden Ansprüche, **dadurch gekennzeichnet, dass** der Reflektor (11) eine rinnen- oder trogförmige Querschnittsfläche aufweist.

8. Vorrichtung nach Anspruch 7, **dadurch gekennzeichnet, dass** sich, in Richtung (6) der Relativbewegung betrachtet, an die beiden Enden der Rinne parallel zur Aufnahmeebene (7) verlaufende Reflektor-Fortsatzflächen (23, 24; 25, 26; 27, 28) anschließen.

9. Vorrichtung nach Anspruch 5 und Anspruch 8, **dadurch gekennzeichnet, dass** die Reflektor-Fortsatzflächen (25, 26; 27, 28) Strukturen aufweisen.

10. Vorrichtung nach einem der vorhergehenden Ansprüche, **dadurch gekennzeichnet, dass** die Strahlungsquelle (8) wenigstens zwei senkrecht zur Richtung (6) der Relativbewegung und parallel zu der Aufnahmeebene (7) verlaufende Zeilen (9, 10) mit Leuchtdioden aufweist.

11. Vorrichtung nach Anspruch 10, **dadurch gekennzeichnet, dass** den wenigstens zwei Zeilen (9, 10) mit Leuchtdioden jeweils ein eigener Reflektor (29, 30) zugeordnet ist und die Leuchtdioden der jeweiligen Zeilen (9, 10) eine Strahlung in einem anderen, insbesondere schmalbandigen, Wellenlängenbereich emittieren, als die Leuchtdioden der anderen Zeilen (9, 10).

12. Vorrichtung (1) nach einem der vorhergehenden Ansprüche,
**dadurch gekennzeichnet, dass** die Speicherleuchtstoffschicht (2) einen Reflexionsgrad für die Löschstrahlung von größer oder gleich 70%, insbesondere größer oder gleich 80%, aufweist.

## Claims

1. An apparatus (1) for erasing a storage phosphor layer (2) comprising
- a radiation source (8) for generating and emitting erasing radiation,
- a drive (5) for generating a relative movement between the storage phosphor layer (2) and the radiation source (8), the storage phosphor layer (2) lying or being moved in a receiving plane (7),
- a reflector (11) for reflecting radiation, the reflector (11) being disposed and shaped for reflecting erasing radiation reflected by the storage phosphor layer (2) in the direction of the storage phosphor layer (2), and
- a further reflective surface (31) for reflecting erasing radiation which, as observed in a direction perpendicular to the direction (6) of the relative movement, lies opposite the reflector (11) and is disposed on the side of the receiving plane (7) facing away from the reflector (11), and
- a storage phosphor layer,
**characterised in that** the apparatus is designed such that that the storage phosphor layer (2) is conveyed through between the reflector (11) and the further reflective surface (31) or with the storage phosphor layer (2) at rest the radiation source (8) is conveyed together with the reflector (11) and the opposing further reflective surface (31) along the storage phosphor layer (2).

2. The apparatus according to Claim 1, **characterised in that** the further reflective surface (31) has a widening (14) in the direction (6) of the relative movement which is at least as great as that of the reflector (11).

3. The apparatus according to any of the preceding claims, **characterised in that** a widening (14) of the reflector (11) in the direction (6) of the relative movement is at least ten times as great as a smallest distance (15) between the reflector (11) and the receiving plane (7).

4. The apparatus according to any of the preceding claims, **characterised in that** the reflector (11) has a level reflector surface (12, 13) which extends parallel to the receiving plane (7).

5. The apparatus according to any of the preceding claims, **characterised in that** the reflector (11) has a reflector surface (19, 20; 25, 26; 27, 28) with a structure.

6. The apparatus according to any of the preceding claims, **characterised in that** the reflector (11) has at least two reflector surfaces so that, as observed in the direction of the relative movement, the reflector is formed on both sides of the radiation source (8).

7. The apparatus according to any of the preceding claims, **characterised in that** the reflector (11) has a channel- or trough-shaped cross-sectional surface.

8. The apparatus according to Claim 7, **characterised in that**, as observed in the direction (6) of the relative movement, reflector appendage surfaces (23, 24; 25, 26; 27, 28) extending parallel to the receiving plane (7) adjoin both ends of the channel.

9. The apparatus according to Claim 5 and Claim 8, **characterised in that** the reflector appendage surfaces (25, 26; 27, 28) have structures.

10. The apparatus according to any of the preceding claims, **characterised in that** the radiation source (8) has at least two lines (9, 10) with light emitting diodes extending perpendicularly to the direction (6) of the relative movement and parallel to the receiving plane (7).

11. The apparatus according to Claim 10, **characterised in that** a particular reflector (29, 30) is respectively assigned to the at least two lines (9, 10) with light emitting diodes, and the light emitting diodes of the respective lines (9, 10) emit radiation particularly in a narrow band wavelength range, different to the light emitting diodes of the other lines (9, 10).

12. The apparatus (1) according to any of the preceding claims, **characterised in that** the storage phosphor layer (2) has a reflection coefficient for the erasing radiation of greater than or equal to 70%, in particular greater than or equal to 80%.

## Revendications

1. Dispositif (1) d'effacement d'une couche d'enregistrement luminescente (2) comportant :
- une source de rayonnement (8) destinée à produire et à émettre un rayonnement d'effacement,
- un dispositif d'entraînement (5) destiné à produire un mouvement relatif entre la couche d'enregistrement luminescente (2) et la source de rayonnement (8), la couche d'enregistrement luminescente (2) reposant ou pouvant être déplacée dans un plan de réception (7),
- un réflecteur (11) destiné à réfléchir le rayonnement, le réflecteur (11) étant disposé et conçu de manière à réfléchir le rayonnement d'effacement, renvoyé par la couche d'enregistrement luminescente (2), en direction de la couche d'enregistrement luminescente (2), et
- une surface réfléchissante supplémentaire (31) située en regard du réflecteur (11), considéré dans la direction perpendiculaire au sens (6) du mouvement relatif, qui est destinée à réfléchir le rayonnement d'effacement, et qui est agencée sur la face du plan de réception (7) qui est détournée du réflecteur (11), et
- une couche d'enregistrement luminescente,
**caractérisé en ce que** le dispositif est conçu de telle façon que la couche d'enregistrement luminescente (2) puisse être transportée entre le réflecteur (11) et la surface réfléchissante supplémentaire (31) ou bien, dans le cas d'une couche d'enregistrement luminescente (2) au repos, que la source de rayonnement (8) puisse être transportée, conjointement au réflecteur (11) et à la surface réfléchissante supplémentaire (31) située en regard de ce dernier, le long de la couche d'enregistrement luminescente (2).

2. Dispositif selon la revendication 1, **caractérisé en ce que** la surface réfléchissante supplémentaire (31) présente, dans le sens (6) du mouvement relatif, une étendue (14) qui est au moins aussi importante que celle du réflecteur (11).

3. Dispositif selon l'une des revendications précédentes, **caractérisé en ce qu'**une étendue (14) du réflecteur (11) dans le sens (6) du mouvement relatif est au moins dix fois plus importante qu'un plus petit écart (15) existant entre le réflecteur (11) et le plan de réception (7).

4. Dispositif selon l'une des revendications précédentes, **caractérisé en ce que** le réflecteur (11) présente une surface de réflecteur (12, 13) plane qui se prolonge parallèlement au plan de réception (7).

5. Dispositif selon l'une des revendications précédentes, **caractérisé en ce que** le réflecteur (11) présente une surface de réflecteur (19, 20 ; 25, 26 ; 27, 28) pourvue d'une structure.

6. Dispositif selon l'une des revendications précédentes, **caractérisé en ce que** le réflecteur (11) présente au moins deux surfaces de réflecteur, de sorte que ledit réflecteur (11), considéré dans le sens du mouvement relatif, est conçu des deux côtés de la source de rayonnement (8).

7. Dispositif selon l'une des revendications précédentes, **caractérisé en ce que** le réflecteur (11) présente une surface de section transversale en forme de rigole ou d'auge.

8. Dispositif selon la revendication 7, **caractérisé en ce que** des surfaces de prolongement de réflecteur (23, 24 ; 25, 26 ; 27, 28) se prolongeant parallèlement au plan de réception (7) font suite aux deux extrémités de la rigole, considéré dans le sens (6) du mouvement relatif.

9. Dispositif selon la revendication 5 et la revendication 8, **caractérisé en ce que** les surfaces de prolongement de réflecteur (25, 26 ; 27, 28) présentent des structures.

10. Dispositif selon l'une des revendications précédentes, **caractérisé en ce que** la source de rayonnement (8) présente au moins deux rangées (9, 10) de diodes électroluminescentes disposées perpendiculairement au sens (6) du mouvement relatif et parallèlement au plan de réception (7).

11. Dispositif selon la revendication 10, **caractérisé en ce que** les au moins deux rangées (9, 10) de diodes électroluminescentes disposent chacune d'un réflecteur propre (29, 30) et les diodes électroluminescentes d'une même rangée (9, 10) émettent un rayonnement dans une plage de longueurs d'ondes différente, notamment à bande étroite, de celle des diodes électroluminescentes d'une autre rangée (9, 10).

12. Dispositif (1) selon l'une des revendications précédentes, **caractérisé en ce que** la couche d'enregistrement luminescente (2) présente un degré de réflexion concernant le rayonnement d'effacement qui est supérieur ou égal à 70 %, notamment supérieur ou égal à 80%.
